# EUROPEAN PATENT APPLICATION

(11) **EP 3 091 199 A1**
(43) Date of publication of application: **09.11.2016**
(21) Application number: 16168598.7
(22) Date of filing: 06.05.2016
(51) Int. Cl.: F01D 25/12, F01D 9/04

(54) **AIRFOIL AND CORRESPONDING VANE**

(30) Priority: 07.05.2015 US 201514706518
(71) Applicant: United Technologies Corporation, Farmington, CT 06032 (US)
(72) Inventor: BOEKE, Mark A., Plainville, CT Connecticut 06062 (US); DeGRAY, Jeffrey J., Hampden, MA Massachusetts 01036 (US); SALZILLO, Richard M., Plantsville, CT Connecticut 06479 (US)
(74) Representative: Hull, James Edward

(57) **Abstract**

An airfoil (90) for a gas turbine engine (20) includes a first platform (94) located at a first end of a first airfoil (92). A cooling passage (100) extends through the first platform (94) and includes a first portion (108) that has a first thickness (D1) and a second portion (110) that has a second thickness (D2) and surrounds opposing ends of the first portion (108).

## Description

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Gas turbine stator vane assemblies typically include a plurality of vane segments which collectively form the annular vane assembly. Each vane segment includes one or more airfoils extending between an outer platform and an inner platform. The inner and outer platforms collectively provide radial boundaries to guide core gas flow past the airfoils. Core gas flow may be defined as gas exiting the compressor passing directly through the combustor and entering the turbine.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes guide the airflow and prepare it for the next set of blades.

In turbine vane design, there is an emphasis on stress-resistant airfoil and platform designs, with reduced losses, increased lift and turning efficiency, and improved turbine performance and service life. The vane platforms include cooling features, such as film cooling holes that are supplied cooling fluid through platform cooling passages. The platform cooling passages formed are intended to protect the vane platform from the hot combustion gases. Therefore, there is a need for improved cooling passages to protect platforms on airfoils.

### SUMMARY

In one exemplary embodiment, an airfoil for a gas turbine engine includes a first platform located at a first end of a first airfoil. A cooling passage extends through the first platform and includes a first portion that has a first thickness and a second portion that has a second thickness and surrounds opposing ends of the first portion.

In a further embodiment of the above, a rib is located between the first portion and the second portion.

In a further embodiment of any of the above, the rib includes a circumferentially extending portion and a pair of axially extending portions.

In a further embodiment of any of the above, the pair of axially extending portions extend at an angle relative to the circumferentially extending portion at an angle between 70 and 100 degrees.

In a further embodiment of any of the above, the rib extends at an angle relative to the radial direction between zero and 35 degrees.

In a further embodiment of any of the above, the rib extends at an angle relative to the radial direction between zero and 20 degrees.

In a further embodiment of any of the above, at least one inlet feed extending into the first portion.

In a further embodiment of any of the above, a vane attachment rail is located adjacent the first platform.

In a further embodiment of any of the above, there is a second airfoil with the cooling passage at least partially axially aligned with the first airfoil and the second airfoil.

In another exemplary embodiment, a vane for a gas turbine engine includes a first platform located at a radially inner end of a first airfoil. A cooling passage extends through the first platform and includes a first portion that has a first thickness and a second portion that has a second thickness. A rib includes a circumferentially extending portion and at least one axial extending portion at least partially surrounding the first portion.

In a further embodiment of any of the above, the second portion at least partially surrounds opposing circumferential ends of the first portion.

In a further embodiment of any of the above, a rib is located between the first portion and the second portion.

In a further embodiment of any of the above, at least one axially extending portion includes a pair of axially extending portions.

In a further embodiment of any of the above, the pair of axially extending portions extend at an angle relative to the circumferentially extending portion at an angle between 70 and 100 degrees.

In a further embodiment of any of the above, the rib extends at an angle relative to the radial direction between zero and 35 degrees.

In a further embodiment of any of the above, the rib extends at an angle relative to the radial direction between zero and 20 degrees.

In a further embodiment of any of the above, at least one inlet feed extends into the first portion.

In a further embodiment of any of the above, a vane attachment rail is located adjacent the platform and at least partially axially aligned with the cooling passage.

In a further embodiment of any of the above, there is a second airfoil with the cooling passage at least partially axially aligned with the first airfoil and the second airfoil.

### BRIEF DESCRIPTION OF THE DRAWINGS

Figure 1 is a schematic view of an example gas turbine engine.
Figure 2 is a cross-sectional view of a turbine section of the example gas turbine engine of Figure 1.
Figure 3 is a perspective cross-sectional view of an example vane.
Figure 4 is a perspective view of an example cooling passage.
Figure 5 is a cross-sectional view taken along line 5-5 of Figure 4.
Figure 6 is an inner view of the example cooling passage of Figure 4.

### DETAILED DESCRIPTION

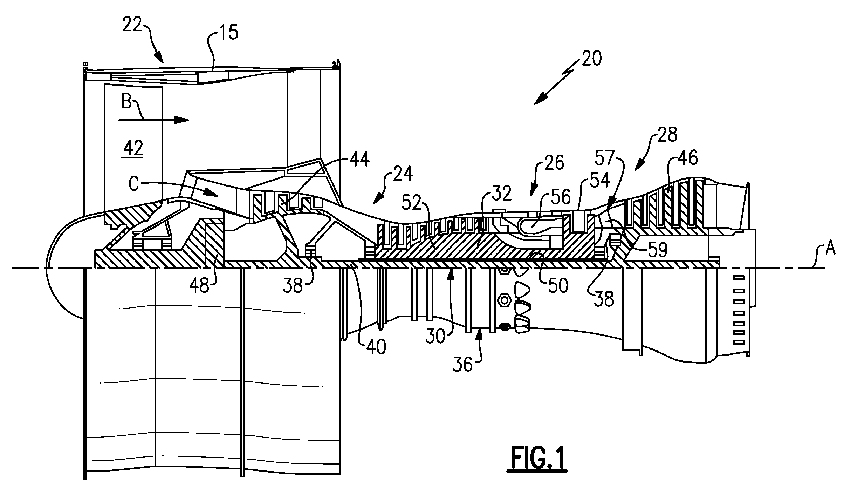

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3:1 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

The example gas turbine engine includes fan 42 that comprises in one non-limiting embodiment less than about twenty-six fan blades. In another non-limiting embodiment, fan section 22 includes less than about twenty fan blades. Moreover, in one disclosed embodiment low pressure turbine 46 includes no more than about six turbine rotors schematically indicated at 34. In another non-limiting example embodiment low pressure turbine 46 includes about three turbine rotors. A ratio between number of fan blades 42 and the number of low pressure turbine rotors is between about 3.3 and about 8.6. The example low pressure turbine 46 provides the driving power to rotate fan section 22 and therefore the relationship between the number of turbine rotors 34 in low pressure turbine 46 and number of blades 42 in fan section 22 disclose an example gas turbine engine 20 with increased power transfer efficiency.

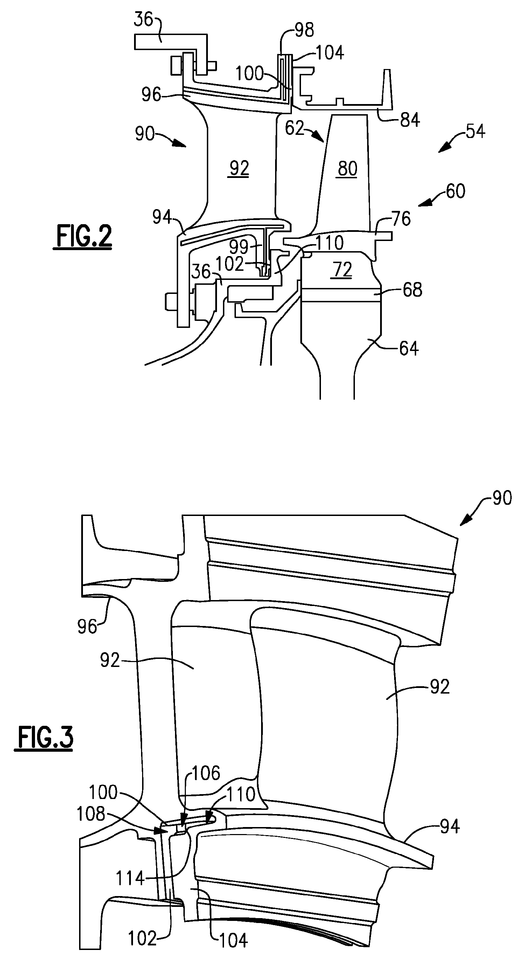

Figure 2 illustrates a schematic view of the high pressure turbine 54, however, other sections of the gas turbine engine 20 could benefit from this disclosure. In the illustrated example, the high pressure turbine 54 includes a one-stage turbine section with a first rotor assembly 60. In another example, the high pressure turbine 54 could include a two-stage high pressure turbine section.

The first rotor assembly 60 includes a first array of rotor blades 62 circumferentially spaced around a first disk 64. Each of the first array of rotor blades 62 includes a first root portion 72, a first platform 76, and a first airfoil 80. Each of the first root portions 72 is received within a respective first rim 68 of the first disk 64. The first airfoil 80 extends radially outward toward a first blade outer air seal (BOAS) assembly 84.

The first array of rotor blades 62 are disposed in the core flow path that is pressurized in the compressor section 24 then heated to a working temperature in the combustor section 26. The first platform 76 separates a gas path side inclusive of the first airfoils 80 and a non-gas path side inclusive of the first root portion 72.

An array of vanes 90 are located axially upstream of the first array of rotor blades 62. Each of the array of vanes 90 include at least one airfoil 92 that extend between a respective inner vane platform 94 and an outer vane platform 96. In another example, each of the array of vanes 90 include at least two airfoils 92 forming a vane doublet. The outer vane platform 96 of the vane 90 may at least partially engage the first BOAS 84.

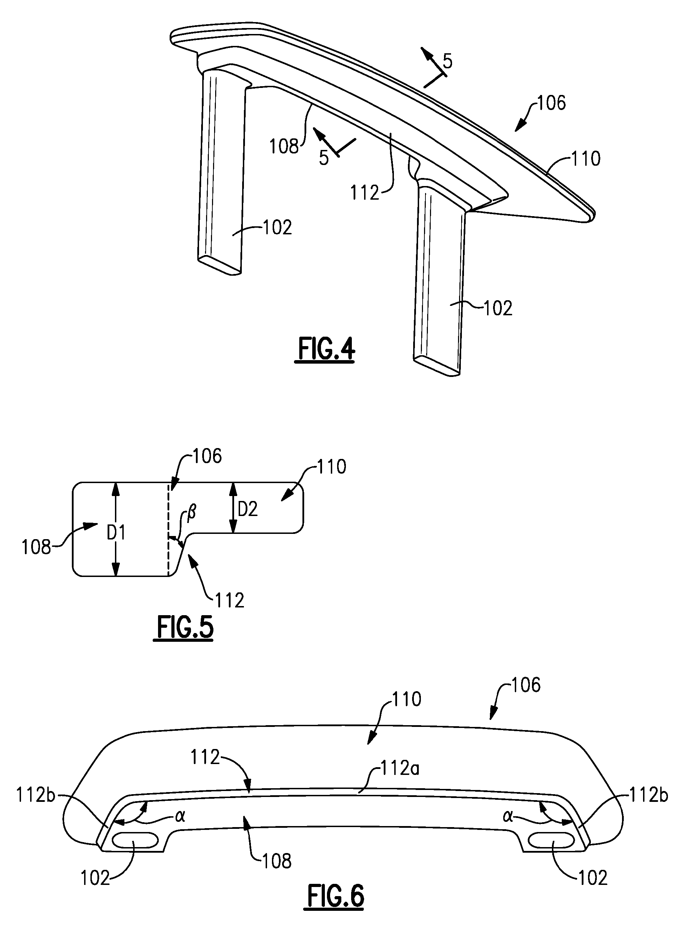

As shown in Figure 3, the vane 90 includes a doublet of airfoils 92 and a cooling passage 100 extending through the vane inner platform 94. The vane passage 100 includes at least one inlet feed 102 that extends outward from the cooling passage 100 adjacent an inner vane rail 104. In the illustrated example, the at least one inlet feed 102 is located on upstream side of the inner vane rail 104 and in another example, the at least one inlet feed 102 is located internal to the inner vane rail 104. In the example where there is more than one inlet feed 102 as shown in Figures 4 and 5, the additional inlet feeds 102 may be used to improve the manufacturability of the vane 90 and then plugged during operation.

As shown in Figures 3 and 4, the vane passage 100 includes an elongated portion 106 that extends between opposing circumferential ends of the inner vane platform 94. The elongated portion 106 includes a first portion 108 have a first thickness D1 in a radial direction and a second portion 110 having a second thickness D2 in the radial direction. (Figure 5). In the disclosure, radial or radial direction is in relation to the axis A of the gas turbine engine 20 unless stated otherwise. The first portion 108 is located axially upstream of the second portion 110. In the illustrated example, the first thickness D1 is greater than the second thickness D2. In another example, the first thickness D1 is approximately twice the second thickness D2.

As shown in Figures 5 and 6, a transition region 112 is located between the first portion 108 and the second portion 110 to transition between the first thickness D1 to the second thickness D2. In the illustrated example, the transition portion 112 forms a structural rib 114 (Figure 3) to increase the structural rigidity of the vane inner platform 94, reduces weight, and improves manufacturing of the ceramic core. The structural rib 114 extends at an angle β relative to a radial direction. In one example, the angle β is between zero and 35 degrees and in another example, the angle β is between zero and 20 degrees.

In the illustrated example, the second portion 110 extends outward toward opposing circumferential ends of the vane inner platform 94 past the first portion 108 such that opposing circumferential ends of the second portion 110 are spaced inward from opposing circumferential ends of the first portion 108. In this disclosure, circumferential or circumferential direction is in relation to a circumference surrounding the axis A of the gas turbine engine 20 unless stated otherwise.

By having the second portion 110 extend beyond the first portion 108, additional material from the platform 94 is able to be removed and the weight of the vane 90 is reduced. This reduces weight because the second portion 110 has a second thickness D2 is smaller than the thickness D1 such that the second portion 110 can extend further towards the opposing ends of the platform 94 without removing excess material or reducing the strength and rigidity of the vane inner platform 94. The vane passage 100 also provides increased surface area along the flow path to maximize cooling.

The transition portion 112 includes a circumferentially extending portion 112a that extends in a circumferential direction through the vane platform 94 and a pair of axially extending portions 112b that extend from opposing ends of the circumferentially extending portion 112a and surround opposing circumferential ends of first portion 108. The pair of axially extending portions 112b extend from the circumferentially extending portion 112a at an angle α. In one example, the angle α is between 70 and 110 degrees and in another example the angle α is between 90 and 110 degrees.

The structural rib 114 defined by the transition portion 112 in the cooling passage 100 further increases the rigidity of the vane platform 94. The transition portion 112 shown in the core of Figures 4-6 corresponds to a structural rib 114 (Figure 3) which defines the transition portion 112 shown in Figures 4-6. Therefore, the structural rib 114 also includes a circumferential portion that follows the circumferential portion 112a and a pair of axially extending portions corresponding to the pair of axially extending portions 112b which defines opposing circumferential ends of the first portion 108.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. An airfoil (90) for a gas turbine engine (20) comprising:
a first platform (94) located at a first end of a first airfoil (92); and
a cooling passage (100) extending through the first platform (94) including a first portion (108) having a first thickness (D1) and a second portion (110) having a second thickness (D2) and surrounding opposing ends of the first portion (108).

2. The airfoil (90) of claim 1, further comprising a rib (114) located between the first portion (108) and the second portion (110).

3. The airfoil (90) of claim 2, wherein the rib (114) includes a circumferentially extending portion (112a) and a pair of axially extending portions (112b).

4. A vane (90) for a gas turbine engine (20) comprising:
a first platform (94) located at a radially inner end of a first airfoil (92); and
a cooling passage (100) extending through the first platform (94) including a first portion (108) having a first thickness (D1) and a second portion (110) having a second thickness (D2); and
a rib (114) including a circumferentially extending portion (112a) and at least one axial extending portion (112b) at least partially surrounding the first portion (108).

5. The vane (90) of claim 4, wherein the second portion (110) at least partially surrounds opposing circumferential ends of the first portion (108).

6. The vane (90) of claim 4 or 5, wherein the rib is located between the first portion (108) and the second portion (110).

7. The vane (90) of claim 4, 5 or 6, wherein the at least one axially extending portion (112b) includes a pair of axially extending portions (112b).

8. The airfoil (90) or vane (90) of claim 3 or 7, wherein the pair of axially extending portions (112b) extend at an angle relative to the circumferentially extending portion (112a) at an angle between 70 and 100 degrees.

9. The airfoil (90) or vane (90) of any of claims 2 to 8, wherein the rib (114) extends at an angle relative to the radial direction between zero and 35 degrees.

10. The airfoil (90) or vane (90) of any preceding claim, wherein the rib (114) extends at an angle relative to the radial direction between zero and 20 degrees.

11. The airfoil (90) or vane (90) of any preceding claim, further comprising at least one inlet feed (102) extending into the first portion (108).

12. The airfoil (90) or vane (90) of any preceding claim, further comprising a vane attachment rail (104) located adjacent the first platform (94).

13. The airfoil (90) or vane (90) of claim 12, wherein the vane attachment rail (104) is at least partially axially aligned with the cooling passage (100).

14. The airfoil (90) or vane of any preceding claim, further comprising a second airfoil (92) with the cooling passage (100) at least partially axially aligned with the first airfoil (92) and the second airfoil (92).
